# EUROPEAN PATENT APPLICATION

(11) **EP 3 257 905 A1**
(43) Date of publication of application: **20.12.2017**
(21) Application number: 17020248.5
(22) Date of filing: 12.06.2017
(51) Int. Cl.: C09D 11/08

(54) **COMPOSITION OF INKS FOR GRAPHIC ARTS FORMULATED WITH CHEMICAL SUBSTANCES USED IN THE FOOD SECTOR**

(30) Priority: 15.06.2016 IT UA20164399
(71) Applicant: Marzagalli, Marco, 26010 Ripalta Cremasca, Cremona (IT)
(72) Inventor: Marzagalli, Marco, 26010 Ripalta Cremasca, Cremona (IT)

(57) **Abstract**

The inks in question are made of shellac (E904) in alkaline water solution, food pigments and if necessary food and/or food additives marked with the letter "E" with its numerical code in addition.

The percentage of the various components is very variable as it depends on the:
✔ S Kind of industrial application
✔ S Viscosity you wish to obtain
✔ S Percentage of dry in the formulation
✔ Coverage degree of the ink
✔ Shade you want to get.

The inks in the various combinations are not formulated with substances that contain gluten nor the same is intentionally added by us.

The field of application concerns the graphic arts in general.

## Description

### Field of the invention

This invention refers to the composition of inks to be used industrially in the graphic arts sector, excluding ink jet printing.

The invention in particular refers to the fact that the formulations of these inks contains only substances used in the food sector that is food and/or food additives without the use of ammonia, which has been used until now to dissolve shellac in order to formulate the inks as described in patent n° WO 1992010547 A1 or EP 0798351 A1 and without the use of alcohols or glycols as described in patent n° US 20040175463 A1.

### State of art

By definition an Ink is a composition of variable consistency, from liquid to paste consisting of pigment(s) and/or dye (s), binders, possible additives and solvents.

It is interesting to emphasize the difference between dye and pigment. Pigments consist of particles of insoluble material in the dispersing phase (water and organic solvents), with which they form a mixture with different viscosity, giving colour and/or opacity. The particles are of micron size and contain many molecules. The dyes are soluble in the dispersing phase and each single molecule of dye forms more or less stable chemical bonds with the molecules of the dispersing phase.

There are three main families of printing inks:
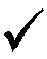 Fat inks: used in traditional offset printing consist of an insoluble solid dye, hard resins, alkylic resins, mineral or vegetable oils with the addition of additives. Such inks dry by penetration, evaporation and air drying;
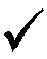 UV inks: used in flexo, offset UV or silkscreen printing. They are composed of pigment, photo initiator, monomers and acrylate oligomers, Such inks dry through ovens equipped with UV lamps.
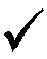 Liquid inks: used in rotogravure, flexo, silkscreen, tampographic printing etc. They are composed of pigments, resins, possible additives and solvent. These inks can be divided into two categories: solvent-based inks and water-based inks. Solvent-based inks are mostly used to obtain adhesion on plastic materials and may contain different types of solvent depending on the material on which they are applied. In general, they are inks that contain solvents that evaporate at low temperatures. Water-based inks are generally of acrylic origin, their main solvent is water and contain a minimal quantity or no solvent.

However, the attention to this industrial invention needs to be addressed more to water-based liquid inks.
As seen, normally, they contain pigments, additives, water as solvent and acrylic resins as described, for example, in patent n° US201657833 or WO2016039960 or TW201421890.
The graphic arts sector, and especially the packaging industry, is now trying to find solutions that are the least harmful possible by using products that are as little as possible subject to the phenomenon of migration, by proposing different solutions that are described , for example, in patent n° WO2009127664 or ZA200607307 or IN4309CHN2014 or US2015376424.

Therefore the solution to date consist of using supports that have a good barrier effect on which inks formulated with low migrant chemicals are applied.

The choice of the support is always a fundamental starting point, but, as to the ink, in this industrial invention is indicated the composition of a product formulated using only substances in the food sector.

Today, a product whose components meet the requirements of MD 21/03/73 or current rules on products in direct contact with food, is wrongly defined as a "food ink". Anyway these are formulations containing chemicals to be sometimes subjected to migration tests.

The series of inks we propose in this industrial invention is formulated with food sometimes in combination with food additives included in the list from E100 to E1520 and with food pigment/s and/or food dye(s) included in the list from E100 to E1520.

The main components of this series of inks are: shellac E904, sodium bicarbonate (or another food alkalinizing), water, food pigment/s and/or food dye/s in addition to possible foodstuff such as, as an example but not restrictive, sugar and/or derivatives, fibres and/or derivatives and food additives between E100 and E1520 selected for various functions such as anti foam, thickeners, preservatives, gelling agents, plasticizers, emulsifiers, PH correctors, perfuming agents, etc.

Shellac is an organic resin secreted by a small insect, Tachard lacquer, belonging to the family of common aphids, which finds its habitat on the native plants of Indian subcontinent and adjacent regions. "To protect itself, the insect produces a resinous substance with which it creates a dark purple red shield , called *lac*, a word of Sanskrit origin which means *one hundred thousand (lakh).* The shield or plaque is the raw material from which shellac is extracted; it is called **sticklac** to indicate that it contains, in addition to the resin, also vegetable remnants. Sticklac is often put on the market as such, but most commonly it is washed, dried in the shade, sifted and put on the market as a raw or natural shellac, which appears in mamillated crusts of dark purple colour.

To date shellac is used for a wide range of applications in the pharmaceutical sector as for example in patent n° IN226CH2013, in the confectionery industry, in hats' sector and in food coating. It is also used , for example, for the manufacture of mole, for disks, hair lacquers, floor waxes, bowling alley coatings and as electrical insulation in the past.

Shellac is also used in the varnishes as described in patent n° CN103849312 or CN104893576 or CN105086817 and in the inks, as for example described in patent n° US5814701 and JPH01158084 especially for the wood industry (patent n° CN104552517), but the formulation we are proposing in this invention does not result to be used today as a solution for having water based inks suitable for the graphic arts sector.

To produce the inks described in this invention, proceed as follows: first prepare an alkaline solution of water by using, for example, some sodium bicarbonate or another alkalizing food and/or food additive .The percentage of such alkalizing agent is 20% at the most. Next, warm and under constant stirring, add shellac.

When shellac is dissolved, filter the solution. The percentage of shellac to be added to the alkaline solution of water depends on the viscosity you wish to obtain and on the percentage of dry that will then affect the final formulation; in any case you can have 70% of shellac on the total at the most.

To this solution of shellac in alkaline solution of water add a variable percentage of food pigment/s and/or food dyes under stirring. The percentage varies from 0,1 to 50% according to the shade you wish to obtain. Following this instructions you can get the base ink which can then be applied industrially in the graphic arts sector with the exception of ink jet printing.

To this base ink it is possible to add food such as, for example, sugar and/or derivates, fibres and/or derivatives, in addition to any food additives included in the list from E100 to E1520 and chosen for various functions such as anti foam, thickeners, preservatives, gelling agents, plasticizers, emulsifiers, pH correctors, perfuming agents, etc. We can state that food products may be present in a concentration between 0% and 75% on the total, while food additives may be present in a concentration between 0% and 25% on the total.

Formulating, as example 1, a green ink you can proceed as follows:
first prepare a solution in which you dissolve for example 10 grams of sodium bicarbonate in 90 grams of water. Then take 50 grams of this solution and under heating and constant stirring add 50 grams of shellac. Go on until shellac is dissolved. At the end of this process, let the solution cool down and verify the weight in order to add some of the starting alkaline solution of water in case there has been a loss of weight. In a new container mix 2 grams of E131 and 8 grams of E102 to which you add 1,5 grams of preservative, for example potassium sorbate. Then add 70 grams of the shellac solution above described, 10 grams of fibres and bring to 100 grams with water.
The various components are chosen also according to the final application as it may be necessary tests of resistance to the light or of resistance to the water or of adhesion on plastic material etc.
This example has only an explicative and *not* a limitative function.

Moreover the fact that shellac has a molecular weight of 1006 Da, guarantees greater safety to the preparation as substances with a molecular weight greater than 1000 Da, even if ingested, are not absorbed by the body in the gastrointestinal tract and therefore do not have a toxicological risk according to EFSA (European Food Safety Authority).

This solution addresses not only the food packaging industry, but all those graphic arts applications that include, for example, manipulation by children who often touch objects and then take their hands to the mouth or even put in contact the object with the mouth.

It also worth pointing out that the components chosen do not contain gluten and it possible to get formulations free from other allergens.

A further advantage that the above mentioned ink present is not only in relation to the "safety" of the finished product, but it also starts from the greater safety in manipulating the initial product since the operator who daily uses such inks have contact with a material that already in the liquid state is formulated with food raw materials without containing ammonia, alcohols or glycols.

## Claims

1. Composition of inks, which can be used in the industrial field, formulated with substances including shellac dissolved in a water alkaline solution, food pigment/s and/or food coloring/s to which it is possible to add food products and/or food additives, marked by letter "E" followed by the relative number code, which have been chosen for various functions as antifoam, thickeners, preservatives, gelling, plasticizers, emulsifiers, pH correctors, perfuming agents, etc.

2. Composition as claimed in Claim 1 in which the water alkaline solution is formulated with an alkalizing food substance present at a maximum concentration of 20% in weight of water solution.

3. Composition as claimed in Claim 1 and 2 in which shellac is present at a maximum concentration of 70% in weight of composition.

4. Composition as claimed in any Claim from 1 to 3 in which food products are present at a concentration ranging between 0% and 75% in weight of composition.

5. Composition as claimed in any Claim from 1 to 4 in which food pigment/s and/or food coloring/s are present at a concentration ranging between 0,1% and 50% in weight of composition.

6. Composition as claimed in any Claim from 1 to 5 in which the possible additives including antifoam, thickeners, preservatives, gelling, plasticizers, emulsifiers, pH correctors, perfuming agents, etc. are present at a concentration ranging between 0% and 25% in weight of composition.

7. Composition as claimed in any Claim from 1 to 6 in which the raw materials used do not contain purposely gluten nor the same is purposely added by us.

8. Composition as claimed in any Claim from 1 to 7 in liquid form with varying viscosity.

9. Composition as claimed in any Claim from 1 to 8 used in the industrial field of graphic arts.
